Europäisches Patentamt

European Patent Office

Office européen des brevets

(11) Publication number: **0 498 315 A2**

## EUROPEAN PATENT APPLICATION

(21) Application number: **92101640.8**

(22) Date of filing: **31.01.92**

(51) Int. Cl.5: **F16K 1/226**

(30) Priority: **05.02.91 JP 35447/91**

(43) Date of publication of application:
**12.08.92 Bulletin 92/33**

(84) Designated Contracting States:
**AT CH DE DK ES FR GB IT LI NL SE**

(71) Applicant: **NBS CO., LTD.**
**No. 234, Kuwagi, Oyama-cho**
**Sunto-gun, Shizuoka-ken(JP)**

(72) Inventor: **Yoshikazu, Suzuki**
**No. 1-2, Gotenba**
**Gotenba-shi, Shizuoka-ken(JP)**

(74) Representative: **Sajda, Wolf E., Dipl.-Phys. et al**
**MEISSNER, BOLTE & PARTNER**
**Widenmayerstrasse 48 Postfach 86 06 24**
**W-8000 München 86(DE)**

(54) **A butterfly valve seat.**

(57) A seat ring (15) and a backup ring (31) holding one side of the seat ring (15) are set in a groove (23) formed by a housing (11) and a seat holding ring (16). A force due to a fluid pressure is applied to the seat ring (15) which is initially supported at one point by the backup ring (31) according to the size of a gap between the seat ring (15) and the backup ring (31), and is then supported at another part by the housing (11) according to the size of the gap between the backup ring (31) and the housing (11) so that the seat ring (15) is not extremely deformed or damaged by any excessive fluid force.

FIG.1

The present invention relates to a butterfly-valve seat designed so that a seat ring, having flexibility, is not damaged by an excessive load generated by a high-pressure and/or high-speed fluid immediately before a butterfly disk closes or after it opens and also, so that it securely seals high-pressure and low-pressure fluids.

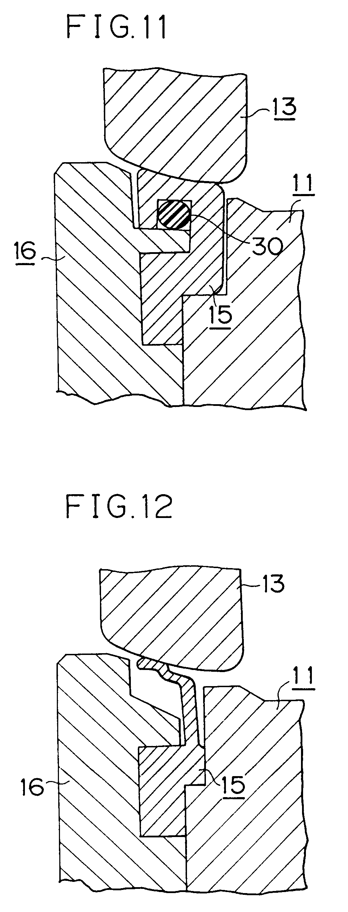

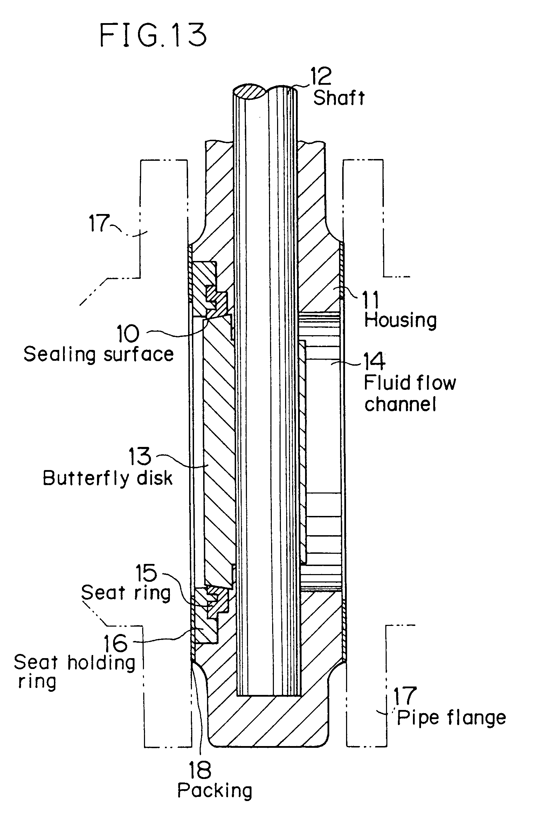

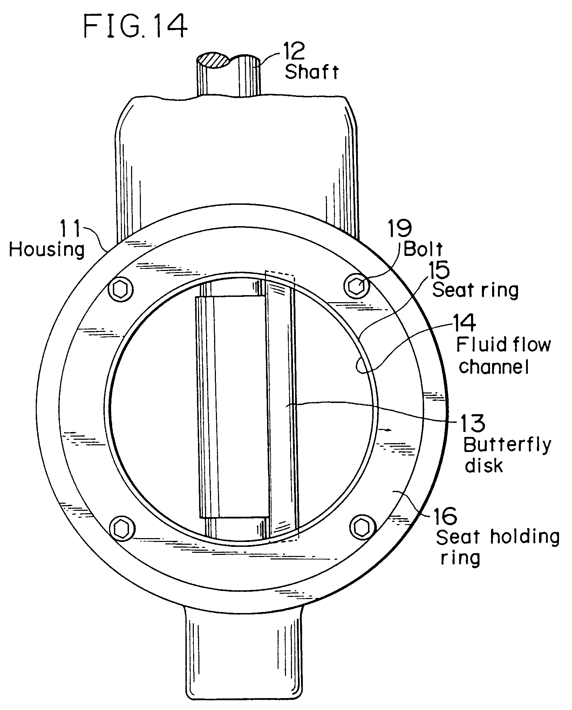

In general, a butterfly valve consisting of a double eccentric structure, as shown in Fig. 13 and 14, is made by installing a rotary shaft 12 on a ring-shaped housing 11 and slightly shifting the position of the centre, in which a butterfly disk 13 is secured to the rotary shaft 12 in order to open or close a fluid flow channel 14 of the housing 11 by flapping the butterfly disk 13 like a butterfly.

In order to improve the sealing ability of the butterfly disk 13, a seat ring 15 is fitted to the inner periphery of the fluid flow channel 14 and is held in position by a seat holding ring 16.

In Fig. 13 and 14, a pipe flange 17 is connected with both sides of the housing 11, respectively, reference numeral 18 designates a leak-preventative packing, and reference numeral 19 designated a bolt for securing the seat ring 15 installed between the housing 11 and the seat holding ring 16.

A sealing surface 10 at the outer periphery of the butterfly disk 13 is formed so that it has a curved spherical surface or the shape of a linear cone so that, by pressing the sealing surface 10 of the butterfly disk 13 against the radius-directional end inside the seat ring 15, it interrupts the flow of the fluid, and by separating the sealing surface 10 from the seat ring 15 it allows the fluid to flow.

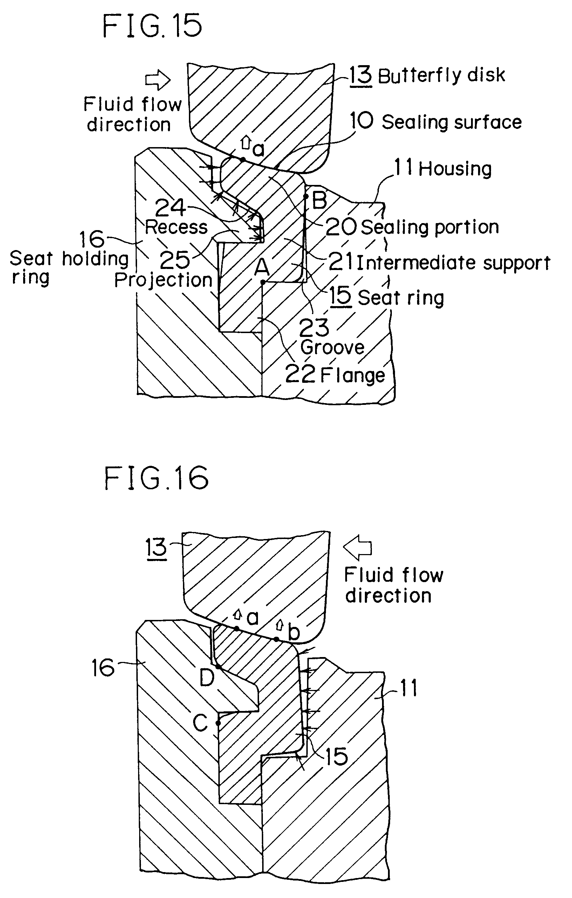

The configuration and function of the seat ring 15 are further described in detailed below with reference to Fig. 15 and 16. The seat ring 15 is made of fluorocarbon resin and is composed of a sealing portion 20 contacting the butterfly disk 13, a flange 22 pressed against a groove 23 between the housing 11 and the seat holding ring 16, and a support 21 between the sealing portion 20 and the flange 22. A projection 25 of the seat holding ring 16 is fitted into a recess 24 of the support 21.

Unless the sealing portion 20 makes contact with the butterfly disk 13, a small gap is formed between the seat ring 15 and the seat holding ring 16, and the seat ring 15 and the housing 11, respectively. The sealing portion 20 of the seat ring 15 is formed with its inside diameter slightly smaller than the outside diameter of the butterfly disk 13 in order to obtain a sealing effect between the butterfly disk 13 and the seat ring 15 according to the reaction caused by the seat ring 15, namely by pressing the seat ring 15 outside when the butterfly disk 13 closes.

According to the above configuration, the sealing effect can be produced by the elastic action of the seat ring 15 for both forward and backward directions of a fluid flow as the butterfly disk 13 closes.

As shown in Fig. 15, for example, it is assumed that the fluid pressure is applied to the seat ring 15 as shown by the arrow from left to right, because the fluid flows in the direction of the arrow, this direction being assumed to be forward. Thereby, the seat ring 15 curves around the point A, which acts as a fulcrum, improving the sealing effect at a contact point "a". In this case, the seat ring 15 is prevented from curving extremely because it makes contact at a point B of the housing 11.

When the fluid flows in the opposite direction, as shown with the big arrow in Fig. 16, a fluid pressure is applied to the seat ring 15 as shown by the arrow, and the seat ring 15 curves around the point C, which acts as a fulcrum, improving the sealing effect in the area between the contact points "a" and "b". In this case, the seat ring 15 is prevented from curving extremely because it makes contact at a point D of the seat holding ring 16.

Although the sealing portion 20 and the support 21 are movably set in the groove 23 composed of the housing 11 and the seat holding ring 16 in order to give flexibility to the seat ring 15, this portion is either resistant to deformation or easily deformed by the fluid pressure depending on the profile of this portion. Consequently, if the profile of the portion is slender, flexibility increases and the portion is easily deformed by the fluid pressure. On the contrary, if the profile of the portion is thick, then its flexibility decreases and the portion is hardly deformed at all by the fluid pressure.

In the former case, the sealing effect against fluid pressure increases and the restoring characteristic is improved, but there is a problem in that the seat ring 15 either locally or throughout suffers damage or deformation due to the load caused by the excessive pressure.

In the latter case, although the seat ring 15 hardly suffers any damage or deformation at all, there is a problem in that its sealing effect decreases and its restoring characteristic is weakened so that, once the seat ring 15 has become deformed, it is hardly restored at all. Nevertheless, in general, the former profile is more widely used.

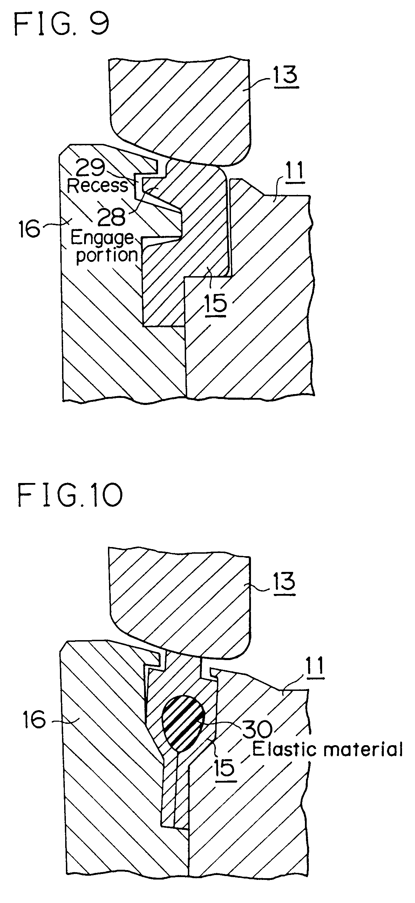

To solve the above problems, various types of seat rings 15 have already become known as shown in Fig. 9 to 12. In Fig. 9, an integrally-protruding engaging portion 28 is formed on the seat ring 15, and a recess 29 is formed in the seat holding ring 16 so that they will be movable (US-A-4 331 319).

In the configurations of Fig. 10 and 11 an elastic material 30 such as rubber or metal is installed in or at the bottom of the seat ring 15 which is made of fluorocarbon resin or the like.

In the structure of Fig. 12, the seat ring 15 is made of a non-flammable metallic plate so that it will withstand high-temperature fluids and fire.

In Fig. 9 and among Fig. 9 to Fig. 12, the seat ring 15 operates well at low pressure, but it is still easily deformed or displaced at high pressure. Because the seat rings 15 in Fig. 10 and 11 have an inadequate restoring characteristic, they are insufficiently able to perform the sealing operation at low pressure as compared with the operation at high pressure. The seat ring 15 in Fig. 12 is insufficiently able to perform a sealing operation both at high and low pressures. Moreover, the seat rings 15 in Fig. 9 to Fig. 11 cannot withstand high-temperature fluids or fire.

It is a first object of the present invention to provide a valve seat with a seat ring operating securely both at low and high pressures without being deformed or displaced in operation.

It is a second object of the present invention to provide a valve seat with a seat ring capable of withstanding high-temperature fluids and fire.

The present invention provides a butterfly-valve seat comprising a butterfly valve including a seat ring sitting in a groove formed by a housing and an opposite seat holding ring, with which seat ring a butterfly disk can be brought into contact or from which the butterfly disk can be separated, wherein the seat ring is provided with a backup ring holding one side of the seat ring and mounted in the same groove as the seat ring.

When the butterfly disk is completely closed, the seat ring curves toward the seat holding ring. In this case, the bearing pressure interrupting the fluid flow is generated at the sealing portion due to the elasticity of the seat ring. At the same time, a force corresponding to the fluid pressure is applied to the surface of the seat ring increasing the bearing pressure at the sealing portion and enhancing or encouraging the sealing effect.

The force applied to the seat ring due to the fluid pressure is initially supported at one point by the backup ring according to a first gap between the seat ring and the backup ring at a certain locus of the seat ring in an initial step, and is then supported by the housing according to a second gap between the backup ring and the housing at another locus of the backup ring in a further step, so that the seat ring is not extremely deformed or damaged.

The invention will be explained in more detail below by means of preferred embodiments and with reference to the accompanying drawings.

Fig. 1
is a sectional view of the main portion showing a first embodiment of the butterfly-valve according to the invention.

Fig. 2
is an operational explanatory view showing the fluid flow in the forward direction.

Fig. 3
is an operational explanatory view showing the fluid flow in the forward direction immediately before the butterfly disk closes or after it opens.

Fig. 4
is an operational explanatory view showing the fluid flow in the backward direction at low pressure and high pressure.

Fig. 5
is an operational explanatory view showing the situation in the case of fire.

Fig. 6
is a sectional view of the main portion showing a second embodiment of the butterfly-valve seat according to the invention.

Fig. 7
is a sectional view of the main portion showing a third embodiment of the butterfly-valve seat according to the invention.

Fig. 8
is a sectional view of the main portion showing a fourth embodiment of the butterfly-valve seat according to the invention.

Fig. 9 to Fig. 12
show sectional views of the main portions of various conventional butterfly-valve seats.

Fig. 13
is a sectional view showing the general structure of a butterfly-valve seat.

Fig. 14
is a front view showing the general structure of a butterfly-valve seat.

Fig. 15
is an operational explanatory view of a conventional butterfly-valve seat with the fluid flow in the forward direction.

Fig. 16
is an operational explanatory view of a conventional butterfly-valve seat with the fluid flow in the backward direction.

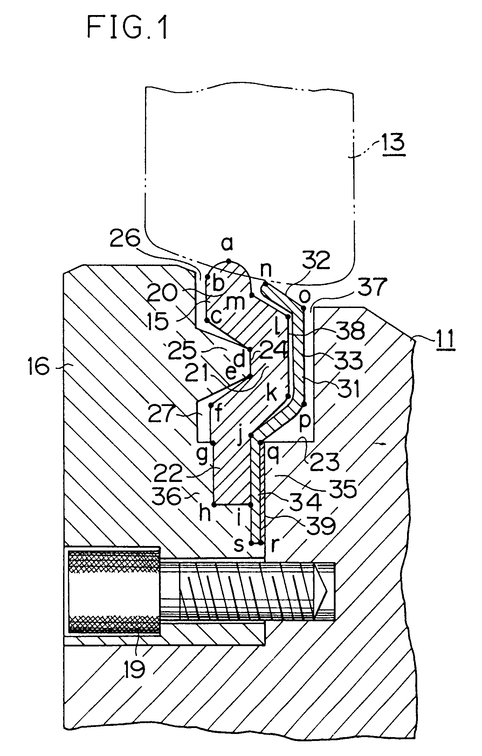

In Fig. 1, showing a first embodiment, the construction comprises a housing 11, a butterfly disk 13, a seat ring 15, and a seat holding ring 16. The configurations of these elements are basically the same as those in Fig. 13 and 14.

In the construction of the present invention, it is essential and characteristic that a backup ring 31 is secured in a groove 23 together with the seat ring 15 at one side thereof. The seat ring 15 and the backup ring 31 are shown in detail in the drawings and described below in further detail.

The seat ring 15 is a ring of the type in which a sealing portion 20 forms the very portion that makes contact with a sealing surface 10 of the butterfly disk 13, and a support 21 forms a portion having a recess 24 which is curved in a U-shape in the middle, while a flange 22 forms the portion held in position by the groove 23 formed by the housing 11 and the seat holding ring 16.

The backup ring 31 is secured in the groove 23 together with and at the side of the seat ring 15 (where the support 21 protrudes) separated only by a small gap 38. The backup ring 31 comprises an end support 32, which makes contact along one side of the sealing portion 20 of the seat ring 15, an intermediate support 33, which makes contact along one side of the support 21, and a securing portion 34, which holds together the backup ring 31 and the seat ring 15 using the flange 22. So, the backup ring 31 has a trough shape in cross-section wherein the radial inner side is fixed and clamped between the housing 11 and the seat holding ring 16 by means of a bolt 19.

The inside diameter of the sealing portion 20 of the seat ring 15 is slightly smaller than the outside diameter of the sealing surface 10 of the butterfly disk 13 in order to be able to press-fit the sealing portion 20 to the sealing surface 10 and so that the inside diameter of the end support 32 of the backup ring 31 is brought as close as possible to the outside diameter of the sealing surface 10 of the butterfly disk 13 so that a secondary sealing, such as a fire safe sealing, can be applied.

The flange 22 and the securing portion 34 of both the seat ring 15 and the backup ring 31 are firmly and reliably held in position by a press-fitting portion 35 of the housing 11 and a press-fitting portion 36 of the seat holding ring 16 through the packing 39, respectively, and the support 21 is held in position by a protrusion 25 of the seat holding ring 16 and the intermediate support 33 of the backup ring 31 so as not to be separated at a low fluid pressure.

The positions of each point of the seat ring 15 and the backup ring 31 are defined by the points "a", "b", "c", "d", "e", "f", "g", "h", "i", "j", "k", "l", "m", "n", "o", "p", "q", "r", and "s" as shown in Fig. 1. A first gap 26 is formed between the surface made by connecting the points "b", "c", and "d" and the seat holding ring 16. A second gap 27 is formed between the surface made by connecting the points "e", "f", and "g" and the seat holding ring 16. A third gap 38 is formed between the surface made by connecting the points "j", "k", "l", and "m" and the backup ring 31. A further gap 37 is formed between the surface made by connecting the points "o", "p", and "q" and the housing 11 when the butterfly disk 13 is not in contact with the sealing portion 20.

As the result of forming the configuration shown above, each of the points "g", "j", and "q" serves as a basic fulcrum producing the elastic effect of the seat ring 15 and the backup ring 31.

The function according to the above configuration is described below for both the forward and backward directions of the fluid flow. Firstly, when the fluid flows from the seat holding ring 16 (from left to right), the fluid direction is assumed to be forward.

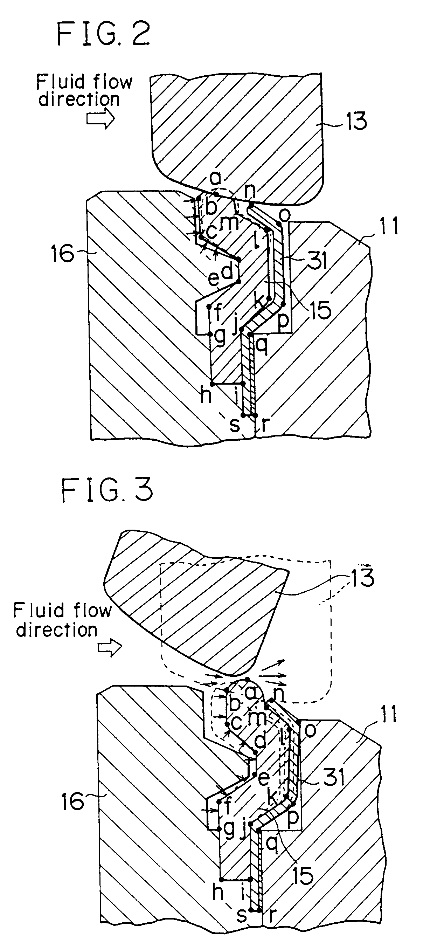

Item (1): The following is a description of the case in which the fluid flows forward as shown in Fig. 2.

The dotted line in Fig. 2 shows the position of the seat ring 15 when the butterfly disk 13 is fully open, this state is called hereafter the natural position of the seat ring 15.

When the butterfly disk 13 is fully closed, the seat ring 15 curves towards the seat holding ring 16 around the point "d", which acts as a fulcrum, as shown by the continuous line in the drawing. In this case, the bearing pressure interrupting the fluid flow is generated at the point "a" due to the elastic force of the seat ring 15. At the same time, a force corresponding to the fluid pressure is applied to the surface of the seat ring 15 in the direction of the arrow increasing the bearing pressure at the point "a" and encouraging and enhancing the sealing effect. The force corresponding to the fluid pressure is applied outwards to the ring-shaped pressuring area in the order of the points "d", "e", and "g" on the basis of the radius direction at the point "a", which is at a maximum at the points "a" and "g".

The seat ring 15, to which the force due to the fluid pressure is applied, is supported initially by the backup ring 31 according to the size of the gap 38 between the seat ring 15 and the backup ring 31 at each of the points "j", "k", "l", and "m" of the seat ring 15, and is then supported by the housing 11 according to the size of the gap 37 between the backup ring 31 and the housing 11 at each of the points "o" and "p" of the backup ring 31 in a further step so that the seat ring 15 is not extremely damaged or deformed. The points "d" and "e" are not separated from the protrusion 25 of the seat holding ring 16 if the fluid has only a low pressure.

Item (2): The protection of the seat ring 15 from excessive load due to a high-pressure or high-speed fluid passing through a very small opening between the point "a" and the butterfly disk 13 is described below for the situation when the fluid flows forward immediately before the butterfly disk 13 closes or after it opens as shown in Fig. 3. The dotted line in the drawing shows the natural position of the seat ring 15.

Immediately after the butterfly disk 13 opens, a very small opening is locally produced between the point "a" and the sealing surface 10 according to the movement of the sealing surface 10 of the butterfly disk 13. Fluid passing through the opening at this instant flows downstream at a high speed according to the pressure generated by the closing of the upstream side. This may give an excessive opening load and locally damage the seat ring 15.

Until the butterfly disk 13 is fully open or even while it is still opening, a load is applied to the seat ring 15 according to the force and power of the fluid flow, and the seat ring 15 may be deformed or damaged. The load increases as the pressure difference between the upstream and downstream sides of the butterfly disk 13 or the flow rate increases. Because the seat ring 15 is made of elastic material, it softens and expands as the environmental or fluid temperature increases, and the strength of the seat ring 15 decreases. Therefore, it is more easily deformed or damaged by the fluid load.

Fig. 3 shows the function of the backup ring 31 for preventing the seat ring 15 from deforming or being damaged.

The load, when the fluid passes through the opening at the point "a", is suddenly applied to the seat ring 15 in the direction of the big arrow and the fluid flows outward in the downstream direction. In this case, the seat ring 15 is moved downstream due to the fluid load around the point "j", which acts as a fulcrum. Unless the backup ring 31 is installed, the fluid load is applied to the point "o" of the housing 11 via the point "l" and the seat ring 15 is deformed downstream depending on the fluid load and the temperature, around the point "l", which acts as a fulcrum. If the seat ring 15 is subjected to an excessive load exceeding the strength of it, it is permanently deformed or damaged.

If the backup ring 31 is present when the above excessive load is applied to the seat ring 15, it supports the seat ring 15 at the point "k", "l", and "m" according to the load and finally supports it at the point "o" of the housing 11 in order to control any excessive deflection due to the downstream deformation of the seat ring 15 and prevent it from being deformed or damaged at the points "l" and "m".

The backup ring 31 should be made of a material having much larger strength than the seat ring 15, but with sufficient elasticity to return it to its natural position afterwards, such as a metallic spring, for example austenitic stainless-steel spring, high-nickel alloy steel spring, or inconel.

It is recommended that the end support 32 of the backup ring 31 be installed at a position as close to the point "a" as possible in order to support and protect the points "l" and "m" of the seat ring 15.

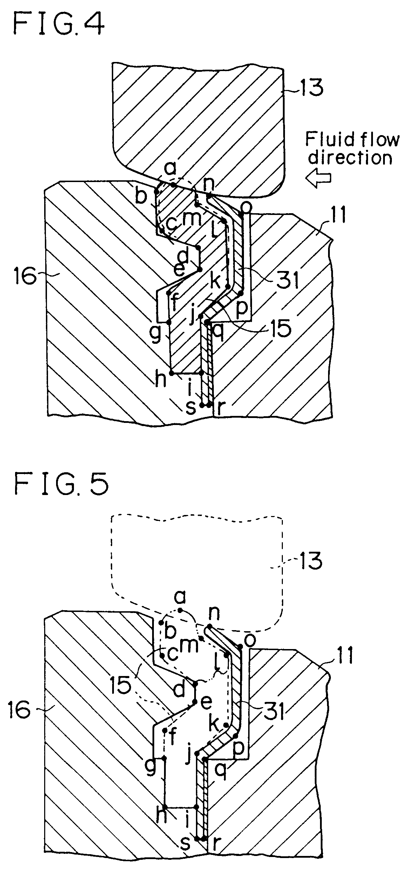

Item (3): The following is a description of the case in which the fluid flows in backward direction, as shown in Fig. 4.

The natural position of the seat ring 15 is shown by the dotted line. The seat ring 15 curves towards the seat holding ring 16 according to the fluid pressure around the point "d", which acts as a fulcrum. To prevent the seat ring 15 from curving excessively due to the fluid pressure, the seat ring 15 is supported at each point of the seat holding ring 16 corresponding to the points "b", "c", and "d" of the seat ring 15 so that it is not extremely deformed or damaged.

Item (4): Protection of the seat ring 15 from excessive load due to a high-pressure and/or high-speed fluid flowing through a very small opening between the point "a" and the butterfly disk 13 is described below for the situation when the fluid direction is backwards, immediately before the butterfly disk 13 closes or after it opens.

As shown in Fig. 4, when the fluid load is applied from the opposite side of the seat holding ring 16 by assuming the opposite side as the upstream side, the fluid instantaneously flows from the opening at the point "a" in contrast to the description in the above Item (2). In this case, the fluid load is applied in the direction shown in Fig. 4 similarly to the case in Item (3). For the protection of the seat ring 15, the fluid load is not directly applied to the surface made by connecting the points "j", "k", "l", and "m" of the seat ring 15, rather it is applied first to the points "q", "p", "o", and "n" of the backup ring 31. Even if an excessive load is applied, the backup ring 31 deflects according to the load around the point "j", which acts as a fulcrum, in order to protect the entire seat ring 15 while making contact at the points "j", "k", "l", and "m" of the seat ring 15.

In a second step, the excessive curvature of the seat ring 15 is finally supported by the surface of the seat holding ring 16 corresponding to the points "b", "c", "d", "e", "f", and "g" of the seat ring 15 preventing the seat ring 15 from being deformed or damaged.

Item (5): The fire safe function is described below.

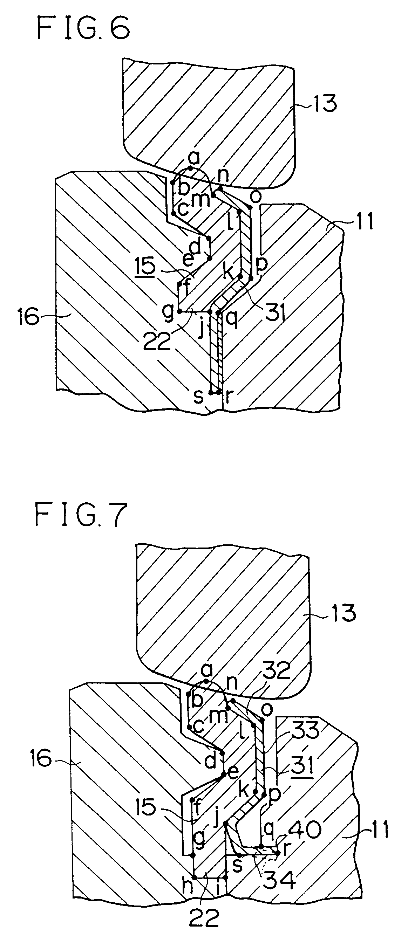

Fig. 5 shows that the point "n" of the backup ring 31 makes contact with the sealing surface 10 of the butterfly disk 13. Consequently, similarly to the method for setting the point "a" of the seat ring 15, the inside diameter at the point "n" of the backup ring 31 is provided in such a manner that it is slightly smaller than the outside diameter of the sealing surface 10 of the butterfly disk 13. Thus, a sealing effect is produced at the point "n". Moreover , because sealing also occurs at the point "n" of the backup ring 31, a sealing effect is produced, and the interruption of the fluid by the butterfly disk 13 can be maintained even if the seat ring 15 is locally burned due to a fire as shown by the chain line in Fig. 5 or entirely burned due to a fire as shown by the dotted line in Fig. 5.

In more detail, the description is the same as in the above Items (1) to (5) under the normal service condition.

If the seat ring 15 is exposed to abnormally high temperatures during a fire, it is locally or entirely burned as shown in Fig. 5. In this case, the backup ring 31 produces a sealing effect which is not affected by the fire because of the elasticity, fire retardancy and strength of the backup ring 31.

Fig. 6 shows a second embodiment of the present invention. Fig. 6 is different from Fig. 1 in that the flange 22 is shorter and that the gaps 27 and 38 are absent. Therefore, the seat ring 15 is secured by the seat holding ring 16 and the backup ring 31 at the points "d", "e", "f", "g", "j", "k", "l", and "m". The backup ring 31 is secured at the points "j", "s", "r", and "q". The sealing effect produced both in the forward and backward directions of the fluid flow, the means of preventing deformation and damage due to the load of the fluid passing through the opening at the point "a", and the fire safe effect in the above configuration are almost the same as those in the above Items (1) to (5).

Fig. 7 shows a third embodiment of the present invention. In Fig. 7, the flange 22 of the seat ring 15 is held in position by the seat holding ring 16 and the housing 11, and the securing portion 34 of the backup ring 31 is curved as shown by the chain line and inserted into an inserting groove 40 formed in the groove 23 in order to secure the portion 34 so that the portion 34 makes a close contact with the seat ring 15 according to the restoring force of the intermediate support 23 and the end support 32. The sealing effect produced in both the forward and backward directions of the fluid flow, the means of preventing deformation and damage due to the load of the fluid passing through the opening at the point "a", and the fire safe effect in the above configuration are almost the same as those in the above Items (1) to (5).

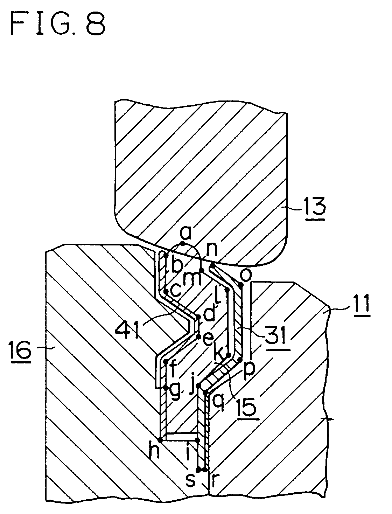

Fig. 8 shows a fourth embodiment of the present invention. In Fig. 8 an upper ring 41 is additionally installed on the other side of the seat ring 15 so that the seat ring 15 will be held in position both by the backup ring 31 and the upper ring 41 at the points "f", "g", "h", "i", and "j". The upper ring 41 makes contact with the backup ring 31 at the point "i", both of which are secured by the seat holding ring 16 and the housing 11 at the points "g", "h", "i", "s", "r", and "q".

It is effective and expedient to use a metallic material having elasticity like the backup ring 31 for the upper ring 41. The upper ring 41 makes contact with the seat ring 15 at the points "b", "c", "d", "e", and "f" and supports the curvature margin of the sealing portion 20 of the seat ring 15 for the seat holding ring 16 when the butterfly disk 13 closes. Since the upper ring 41 is able to constantly apply a firm force to the point "a" around the point "g", which acts as a fulcrum, the means of protecting the seat ring 15 comprise the upper ring 41 together with the backup ring 31. The sealing effect produced by the seat ring 15 and the backup ring 31 is almost the same as that described in the above Items (1) to (5).

As shown in the various Fig. 1 to 8 of the drawings, the backup ring 31 and the upper ring 41 have a trough shape in cross-section which is complementary with the shape of the seat ring 15 giving elastic freedom and support as necessary in practice, respectively.

## Claims

1. A butterfly-valve seat comprising a butterfly valve including a seat ring (15) sitting in a groove (23) formed by a housing (11) and an opposite seat holding ring (16), with which seat ring (15) a butterfly disk (13) makes contact or from which the butterfly disk (13) can be separated, wherein the seat ring (15) is provided with a backup ring (31) holding one side of the seat ring (15) and is mounted in the same groove (23) as the seat ring (15).

2. The butterfly-valve seat according to claim 1, wherein the seat ring (15) has a sealing portion (20) and a support (21), while the backup ring (31) has an end support (32) and an intermediate support (33) which hold the sealing portion (20) and the support (21) in position, respectively.

3. The butterfly-valve seat according to claim 1 or 2, wherein the groove (23) has a configuration forming a first gap (26) between the sealing portion (20) of the seat ring (15) and the seat holding ring (16), a second gap (38) between the seat ring (15) and the backup ring (31), and a third gap (37) between the backup ring (31) and the housing (11).

4. The butterfly-valve seat according to claim 2 or 3, wherein the end support (32) of the backup ring (31) is designed so that it will make no contact with the sealing surface (10) of the butterfly disk (13) when the butterfly disk (13) closes.

5. The butterfly-valve seat according to any of claims 2 to 4, wherein the end support (32) of the backup ring (31) is designed so that it presses against the sealing surface (10) of the butterfly disk (13) when the butterfly disk (13) closes.

6. The butterfly-valve seat according to any of claims 1 to 5,
comprising an upper ring (41) positioned for engagement with a second surface of the seat ring (15), while the backup ring (31) is positioned on the opposite first surface of the seat ring (15) so that a flange portion (22) of the seat ring (15) is sandwiched and clamped between the backup ring (31) and the upper ring (41) in the groove (23) formed by the housing (11) and the seat holding ring (16).

7. The butterfly-valve seat according to any of claims 1 to 6,
wherein the backup ring (31) and/or the upper ring (41) have a trough shape in cross-section.

FIG.1

FIG. 2

Fluid flow direction ⇨

FIG. 3

Fluid flow direction ⇨

# FIG.4

Fluid flow
direction

# FIG.5

FIG.6

FIG.7

FIG. 8

FIG. 9

13
29 Recess
11
16
28 Engage portion
15

FIG.10

13
11
16
30 Elastic material
15

FIG.11

FIG.12

# FIG.13

12
Shaft

11
Housing

10
Sealing surface

14
Fluid flow
channel

13
Butterfly disk

15
Seat ring

16
Seat holding
ring

17
Pipe flange

18
Packing

FIG.14

12 Shaft

11 Housing

19 Bolt

15 Seat ring

14 Fluid flow channel

13 Butterfly disk

16 Seat holding ring

## FIG.15

Fluid flow direction

13 Butterfly disk
10 Sealing surface
11 Housing
24 Recess
B
20 Sealing portion
16 Seat holding ring
25 Projection
A
21 Intermediate support
15 Seat ring
23 Groove
22 Flange

## FIG.16

13

Fluid flow direction

16
a    b
D
11
C
15